(19) Europäisches Patentamt / European Patent Office / Office européen des brevets

(11) **EP 3 301 798 A1**

(12) **EUROPEAN PATENT APPLICATION**

(43) Date of publication:
04.04.2018 Bulletin 2018/14

(51) Int Cl.:
*H02M 1/32* (2007.01)   *H02M 7/219* (2006.01)
*H02M 7/5387* (2007.01)   *H02H 7/122* (2006.01)
*H02H 9/04* (2006.01)   *H02M 1/00* (2006.01)
*H02M 1/42* (2007.01)

(21) Application number: 17193941.6

(22) Date of filing: 29.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.09.2016   CN 201610873349

(71) Applicant: Delta Electronics (Thailand) Public Co., Ltd.
Amphur Muang 10280 (TH)

(72) Inventors:
• CHANG, Lei
  10280 Tampol Phraksa, Amphur Muang,
  Samutprakarn (TH)
• SUN, Hao
  10280 Tampol Phraksa, Amphur Muang,
  Samutprakarn (TH)
• ZHANG, Jinfa
  10280 Tampol Phraksa, Amphur Muang,
  Samutprakarn (TH)

(74) Representative: 2K Patentanwälte Blasberg
Kewitz & Reichel
Partnerschaft mbB
Schumannstrasse 27
60325 Frankfurt am Main (DE)

(54) **AC-SIDE SURGE VOLTAGE PROTECTION FOR ACTIVE BRIDGE CONVERTER**

(57)    The present disclosure provides a power conversion device for receiving and converting an AC power provided by an AC power source. The power conversion device includes a power conversion circuit and a surge bypass circuit. The power conversion circuit comprises a bridge switching unit and a bus capacitor. The surge bypass circuit comprises a rectification circuit and an inductive coupling magnetic element. The inductive coupling magnetic element is electrically connected with the rectification circuit in series, and forms a multi-terminal network with the rectification circuit. The multi-terminal network comprises plural AC terminals and two DC terminals. The AC terminals are electrically connected with the AC power source. The bridge switching unit and the bus capacitor are electrically connected with two DC terminals in parallel.

FIG. 1

**Description**

CROSS-REFERENCE TO RELATED APPLICATION

This application claims priority to China Patent Application No. 201610873349.5, filed on September 30, 2016, the entire content of which is incorporated herein by reference for all purposes.

FIELD OF THE DISCLOSURE

The present disclosure relates to a power conversion device, and more particularly to a power conversion device capable of bypassing the surge energy.

BACKGROUND OF THE DISCLOSURE

Power conversion devices are widely used in various electronic equipments to provide the electronic equipments with required power.

Generally, the power conversion device converts power by means of the inner switch elements. The full-bridge circuit is widely used in the power conversion device for AC/DC conversion and DC/AC conversion. Since the unipolar PWM modulation method may help downsize the power conversion device and improve the conversion efficiency, the unipolar PWM modulation method is widely used for the control of the full-bridge circuit.

Due to that the filter inductor is among the middle points of the bridge arms, the full-bridge circuit works with switching frequency alternating voltage. Moreover, the unipolar PWM modulation method brings some particular states, which make the power conversion device harder to protect against the surge energy by traditional means. Especially for applications of high frequency, since the filter inductor has smaller inductance, the surge energy may lead to saturation of the filter inductor. Once the filter inductor is saturated, the filter inductor cannot balance the voltage difference. Thus the input current of the power conversion device increases rapidly and damages the switch elements.

The common manner for limiting the surge energy in conventional power conversion device is disposing a paralleled voltage-stabilized clamp device on the AC terminal and additionally disposing a surge bypass circuit in parallel with the filter inductor and the full-bridge circuit to lead the surge energy to an absorption circuit, so the filter inductor can be prevented from saturation and the switch elements can be protected.

However, since the filter inductor using unipolar PWM modulation method works with double switching frequency alternating voltage, and the upper transistors or the lower transistors of the full-bridge circuit may be turned on at the same time, the filter inductor may be short-circuited by the surge bypass circuit in the conventional power conversion device. Consequently, the operation of the full-bridge circuit using unipolar PWM modulation method is affected.

Therefore, there is a need of providing a power conversion device to obviate the drawbacks encountered from the prior arts.

SUMMARY OF THE DISCLOSURE

It is an object of the present disclosure to provide an enhanced power conversion device configured for addressing particularly the afore-mentiioned problem that the operation of the full-bridge circuit is affected by the surge bypass circuit in the conventional power conversion device.

This problem is solved by a power conversion device as claimed by claim 1. Further advantageous embodiments are the subject-matter of the dependent claims.

By using the power conversion device according to the present invention, the unipolar control is applicable, the efficiency is enhanced and the cost is reduced, as outlined below in more detail.

According to the present invention there is provided a power conversion device for receiving and converting an AC power from an AC power source. The power conversion device includes a power conversion circuit and a surge bypass circuit. The power conversion circuit includes a bridge switching unit, at least one filter inductor and a bus capacitor. The at least one filter inductor is electrically connected with the bridge switching unit. The bridge switching unit includes two DC terminals electrically connected with two terminals of the bus capacitor respectively. The surge bypass circuit includes a rectification circuit and an inductive coupling magnetic element. The inductive coupling magnetic element is electrically connected with the rectification circuit in series, and the inductive coupling magnetic element and the rectification circuit form a multi-terminal network. The multi-terminal network comprises plural AC terminals and two DC terminals. The plural AC terminals are electrically connected with the AC power source, and the two DC terminals are electrically connected with the bridge switching unit and the bus capacitor in parallel.

BRIEF DESCRIPTION OF THE DRAWINGS

FIG. 1 is a circuit diagram illustrating a power conversion device according to a first embodiment of the present disclosure;
FIG. 2 is a circuit diagram illustrating a power conversion device according to a second embodiment of the present disclosure;
FIG. 3 is a circuit diagram illustrating a power conversion device according to a third embodiment of the present disclosure;
FIG. 4 is a circuit diagram illustrating a power conversion device according to a fourth embodiment of the present disclosure; and
FIG. 5 is a circuit diagram illustrating a power conversion device according to a fifth embodiment of the present disclosure.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

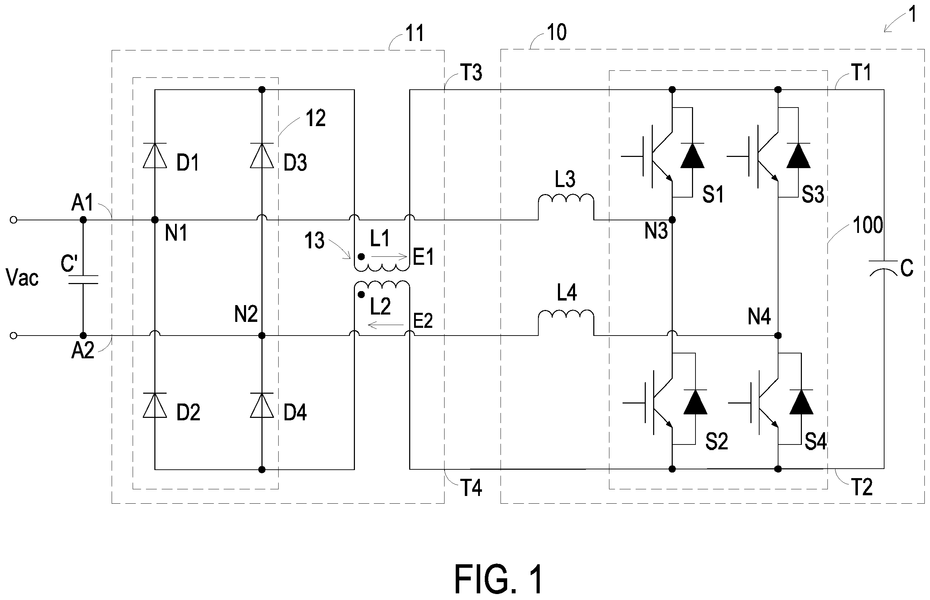

FIG. 1 is a circuit diagram illustrating a power conversion device according to a first embodiment of the present disclosure. As shown in FIG. 1, the power conversion device 1 includes a power conversion circuit 10 and a surge bypass circuit 11. The power conversion circuit 10 is electrically connected with an AC power source Vac (i.e. a single-phase AC power source) to receive the AC power. One or more filter capacitors C' may be connected with the AC power source Vac. The power conversion circuit 10 includes a bridge switching unit 100, a first filter inductor L3, a second filter inductor L4 and a bus capacitor C. It is noted that the power conversion circuit 10 may include plural first filter inductors L3 and/or plural second filter inductors L4, or only one filter inductor according to different topologies, and the filter inductor(s) is(are) electrically connected with the bridge switching unit 100. The bridge switching unit 100 includes plural switch elements (for example, four switch elements S1, S2, S3, S4) and two DC terminals T1, T2. The two DC terminals T1, T2 are electrically connected with two terminals of the bus capacitor C respectively, and the first filter inductor L3 and the second filter inductor L4 are electrically connected with the bridge switching unit 100. Consequently, the power conversion circuit 10 converts the power by performing the switching operations of the switch elements S1, S2, S3, S4, filters the converted power via the first filter inductor L3 and the second filter inductor L4, and stabilizes the voltage via the bus capacitor C. Preferably but not exclusively, the switch elements S1, S2, S3, S4 are controlled by a unipolar PWM modulation method.
The surge bypass circuit 11 includes a rectification circuit 12 and an inductive coupling magnetic element 13. The rectification circuit 12 is electrically connected with the AC power source Vac, and includes two bridge arms, for example a first bridge arm and a second bridge arm. Each bridge arm includes two switch elements connected with each other in series. The switch element may be diode. As shown in FIG. 1, the first bridge arm includes two diodes D1, D2 connected with each other in series, and the second bridge arm includes two diodes D3, D4 connected with each other in series. Namely, the rectification circuit 12 is a full-bridge rectification circuit. In addition, a first node N1 (a middle point of the first bridge arm) is connected with a first terminal of the AC power source Vac, and a second node N2 (a middle point of the second bridge arm) is connected with a second terminal of the AC power source Vac.
The inductive coupling magnetic element 13 is electrically connected with the rectification circuit 12 in series, and forms a multi-terminal network with the rectification circuit 12. The multi-terminal network includes at least four terminals, for example two AC terminals A1, A2 and two DC terminals T3, T4 as shown in FIG. 1. The two AC terminals A1, A2 are electrically connected with two terminals of the AC power source Vac. Consequently, in one embodiment, the AC terminal A1 is actually the first node N1, and the AC terminal A2 is actually the second node N2. The bridge switching unit 100 and the bus capacitor C are electrically connected with the two DC terminals T3, T4 in parallel. Namely, the two DC terminals T1, T2 are electrically connected with the two DC terminals T3, T4 respectively. Moreover, the inductive coupling magnetic element 13 includes a first suppression inductor L1 and a second suppression inductor L2. The first suppression inductor L1 and the second suppression inductor L2 are coupled with each other, and form coupling inductors. A first terminal of the first suppression inductor L1 is electrically connected with a positive output terminal of the rectification circuit 12, and a second terminal of the first suppression inductor L1 is electrically connected with a first terminal of the bus capacitor C. A first terminal of the second suppression inductor L2 is electrically connected with a negative output terminal of the rectification circuit 12, and a second terminal of the second suppression inductor L2 is electrically connected with a second terminal of the bus capacitor C. Consequently, in one embodiment, the two DC terminals T3, T4 are actually the second terminal of the first suppression inductor L1 and the second terminal of the second suppression inductor L2 respectively. Alternatively, in other embodiment, the first suppression inductor L1 and the second suppression inductor L2 may be a primary winding and a secondary winding of a transformer, respectively.

In the above-mentioned embodiments, the bridge switching unit 100 is a full-bridge circuit including two bridge arms, for example a first bridge arm (i.e. a leading bridge arm) and a second bridge arm (i.e. a lagging bridge arm). Each bridge arm includes two switch elements connected with each other in series. As shown in FIG. 1, the first bridge arm includes two switch elements S1, S2 connected with each other in series. The second bridge arm includes two switch elements S3, S4 connected with each other in series.

Furthermore, as shown in FIG. 1, the first filter inductor L3 is electrically connected between a third node N3 of the first bridge arm of the bridge switching unit 100 and the first terminal of the AC power source Vac, and the second filter inductor L4 is electrically connected between a fourth node N4 of the second bridge arm of the bridge switching unit 100 and the second terminal of the AC power source Vac. The third node N3 is electrically connected with the switch elements S1, S2 and the fourth node N4 is electrically connected with the switch elements S3, S4.

The operation principle of the surge bypass circuit 11 will be described in the following with FIG. 1. Since the first filter inductor L3 and the second filter inductor L4 are working in symmetrical AC mode and will both need to withstand positive voltage (here define "positive voltage" as left to right direction voltage) or negative voltage (here define "negative voltage" as right to left direction voltage), the detailed analysis will be performed respectively under the situation that the first filter inductor L3 withstands positive voltage and the second filter inductor L4 withstands negative voltage. When the first filter inductor L3 withstands the positive voltage, the diode D1 and the switch element S1 may short-circuit the first filter inductor L3 if the inductive coupling magnetic element 13 is not employed. Similarly, when the second filter inductor L4 withstands the negative voltage, the diode D4 and the switch element S4 may short-circuit the second filter inductor L4 if the inductive coupling magnetic element 13 is not employed. Whether the filter inductor is short-circuited or not depends on the state of the switch elements S 1 and S4. Once the switch element S1 or S4 is turned on, the corresponding first filter inductor L3 or second filter inductor L4 will be short-circuited, which means that only one of the two filter inductors are actually working. Under this circumstance, if the inductive coupling magnetic element 13 is not employed, the total inductance of the power conversion device 1 may be reduced to half, and the ripple current may be doubled. Consequently, the original work status of the power conversion device 1 is affected.

Since the power conversion device 1 includes the inductive coupling magnetic element 13, which provides high common-mode reactance in the surge bypass circuit 11, there will be no short circuit to the filter inductor in normal operation. Consequently, the above-mentioned drawbacks are avoided. As shown in FIG. 1, the windings of the inductive coupling magnetic element 13 are coupled with each other at the dotted terminals. Under this circumstance, the characteristic of the inductive coupling magnetic element 13 in the differential-mode direction is similar to that of the common-mode filter inductor. When the power conversion device 1 is subject to the surge energy on the AC power source Vac, the inductive coupling magnetic element 13 provides low reactance in differential-mode direction. Therefore, the inductive coupling magnetic element 13 transfers the surge energy to the bus capacitor C, which absorbs the surge energy and protects the bridge switching unit 100.

For the circumstance that the power conversion device 1 is operated normally, the principle of the inductive coupling magnetic component 13 providing high inductive reactance is described in detail as follows. Since the working statuses of the power conversion device 1 are symmetry in the positive half cycle and the negative half cycle of the AC power, the power conversion device 1 is only analyzed in the positive half cycle. Since the working sequence of the bridge switching unit 100 is not affected by the surge bypass circuit 11, the working status of the surge bypass circuit 11 can be divided into three basic statuses according to the status of the inductive coupling magnetic element 13. The first basic status is the inductive coupling magnetic element blocking stage when the inductive coupling magnetic element 13 resists the short circuit of the first filter inductor L3 or the second filter inductor L4. The second basic status is the demagnetization stage of the inductive coupling magnetic element 13. The third basic status is the blocking stage of the rectification circuit 12.

First, at the first basic status, the inductive coupling magnetic element 13 has an initial excitation current equal to zero or a certain positive value. It is noted that the positive excitation current here means the excitation current has the same direction as the direction of the current excited in the inductive coupling magnetic element 13 while resisting the short circuit. For example, as shown in FIG. 1, the excitation current with direction from left to right (shown as E1 in FIG. 1) is the positive excitation current in the first suppression inductor L1, and the excitation current with direction from right to left (shown as E2 in FIG. 1) is the positive excitation current in the second suppression inductor L2. Normally, at the first basic status, the two switch elements S1, S3 or the two switch elements S2, S4 are both turned on. The first basic status is ended at the time that the bridge switching unit 100 switches to other switching status.

In an embodiment, the two switch elements S1, S3 may be both turned on for providing zero level in the unipolar PWM modulation method. Under this circumstance, the first filter inductor L3 withstands the positive voltage, and the second filter inductor L4 withstands the negative voltage. Since the switch element S4 is turned off, the second filter inductor L4 is impossible to be short-circuited while withstanding the negative voltage. The first suppression inductor L1 withstands the working voltage of the first filter inductor L3. Namely, the first suppression inductor L1 can be regarded as being electrically paralleled with the first filter inductor L3. Consequently, the first suppression inductor L1 prevents the first filter inductor L3 from being short-circuited by the diode D1 and the switch element S1. In the first basic status, since the suppression inductors L1 and L2 are closely coupled, there will be an excitation voltage on the second suppression inductor L2 which is with the same value of the voltage on the first suppression inductor L1. However, since the DC bus voltage is higher than the AC side peak voltage, according to the voltage relation of the circuit loop Vac-D1-L1-C-L2-D4, no current will be formed in the second suppression inductor L2. Consequently, the normal work of the bridge switching unit 100 is not affected, and the second suppression inductor L2 can be regarded as an open circuit.

The first suppression inductor L1 withstands voltage and forms excitation current in the first basic status. However, comparing with the current flowing through the first filter inductor L3, the current flowing through the first suppression inductor L1 can be ignored if the inductance of the first suppression inductor L1 is much larger than the inductance of the first filter inductor L3. Namely, there is only signal-level current flowing through the first suppression inductor L1, and the surge bypass circuit 11 does not affect the normal work of the bridge switching unit 100 with the unipolar PWM modulation method. In addition, the first suppression inductor L1 withstands the same volt-second value as that of the first filter inductor L3. So, when designing the inductive coupling magnetic element 13, not only the inductance of suppression inductors L1 and L2 need to be considered, but also the maximum withstanding volt-second needs to be considered. Simultaneously, the coupling between the first suppression inductor L1 and the second suppression inductor L2 should be strengthened to reduce the differential-mode inductive reactance. In order to realize the above-mentioned purpose, the following formulas (1) and (2) are used for the design of the inductive coupling magnetic element 13:

$$N = \left. \int_0^{\frac{Ts}{2}} v(t)dt \middle/ Acore \cdot B\max \right. \qquad (1)$$

$$N = \sqrt{\left. Lm \cdot Le \middle/ Acore \cdot \mu i \cdot \mu o \right.} \qquad (2)$$

The integral part of the formula (1) means the volt-second value on the suppression inductor L1 or L2, which is the time integration of the withstood voltage on the suppression inductor L1 or L2 in the period when the suppression inductor L1 or L2 inhibits the short circuit of the filter inductor L3 or L4. When the rectification circuit 12 employs general rectification diodes, which cause a larger reverse recovery time of the diode, the volt-second value caused by the reverse recovery should also be considered. The larger N value of formulas (1) and (2) is chosen as the result. The way that the reverse recovery of the diode impacts on the inductive coupling magnetic element 13 will be described hereinafter. In formulas (1) and (2), Acore means the effective core area of the inductive coupling magnetic element 13, and Bmax means the maximum working magnetic flux density of the magnetic core material which may be reached before saturation, and Lm means the magnetize inductance of the inductive coupling magnetic element 13 because the inductive coupling magnetic element 13 can be regarded as a common-mode choke or 1:1 ratio transformer.

The magnetize inductance Lm should be much larger than the inductance value of the first filter inductor L3 and the second filter inductor L4 (such as over ten times) to assure the best effect. And, the air-gap-free magnetic core is generally used in order to obtain larger inductance value in smaller magnetic core with less winding turns. Le is the equivalent magnetic path length of the magnetic core, $\mu i$ is the relative magnetic permeability of the magnetic core (or the equivalent relative magnetic permeability considering the existence of the air gap), and $\mu o$ is the vacuum magnetic permeability.

Based on the two formulas above, the maximum volt-second value is fixed in a circuit. A minimum value of the magnetize inductance Lm can be set, such as the inductance value ten times the first filter inductor L3. The other parameters are the winding turns N, the parameters Bmax, $\mu i$ and $\mu o$ relative to the magnetic core material and the parameters Le and Acore relative to the magnetic core geometry. The value of N should be as small as possible in order to make the differential-mode inductive reactance smaller. Choosing the magnetic core with larger value of Bmax can reduce the volume of the magnetic core and the value of N. Choosing larger value of $\mu i$ can also reduce the volume of the magnetic core and the winding turns N according to the formula (2), so that the inductance value larger than the magnetize inductance Lm is realized by less turns and smaller magnetic core.

When the switch elements S 1 and S3 are not both on or the switch elements S2 and S4 are not both on, the first basic status ends and comes to the second basic status which is the demagnetizing stage of the inductive coupling magnetic component 13. In this embodiment, in the end of the first basic status, there is a positive excitation current in the first suppression inductor L1, and the following demagnetization stage of the second basic status is discussed under this premise. The demagnetization stage can be divided into three situations according to the working status of the bridge switching unit 100. To facilitate better understanding, they are named situation 2.1, situation 2.2 and situation 2.3 of demagnetizing stage.

In the first situation 2.1 of the demagnetization stage, the switch elements S 1 and S4 are both turned on. Since the DC bus voltage is higher than the AC side peak voltage, the first filter inductor L3 and the second filter inductor L4 withstand the negative voltage and the positive voltage respectively. The first situation 2.1 can further be detailedly divided into the basic demagnetization stage and the negative excitation stage for considering the reverse recovery of the diodes in the rectification circuit 12 acting on the inductive coupling magnetic element after demagnetization.

For the basic demagnetization stage, the first suppression inductor L1 and the first filter inductor L3 withstand the same voltage, which means that the two inductors can be seen as being electrically connected with each other in parallel and withstand the negative voltage. The first suppression inductor L1 demagnetizes via the diode D1 with the negative voltage. There is no current flowing through the second suppression inductor L2 due to the diodes D2, D4. Consequently, the normal work of the bridge switching unit 100 is not affected, and the second suppression inductor L2 can be regarded as open circuit.

If considering that there is no reverse recovery in the diodes, the demagnetization of the first situation 2.1 is finished here, and the next blocking stage of the rectification circuit 12 is entered. However, if the reverse recovery in the diodes of the rectification circuit 12 is considered, there is a reverse excitation stage after the demagnetization stage. Since the diodes of the rectification circuit 12 are in the reverse recovery stage, the diodes D1, D2, D3, D4 are unable to block the negative voltage immediately. Therefore, the negative voltage that should be blocked by the diodes D1, D2, D3, D4 is applied on the inductive coupling magnetic element 13. Through the reverse excitation to the inductive coupling magnetic element 13, the negative excitation current is formed and provides the diodes D1, D2, D3, D4 with the reverse recovery current. When the diodes D1, D2, D3, D4 complete the reverse recovery and withstand the negative voltage, the negative excitation current is transferred to the other suppression inductor by coupling, and the positive excitation current of the other suppression inductor is formed. This stage should be considered while designing the inductive coupling magnetic element 13.

The second situation 2.2 of demagnetization stage is that the switch elements S1, S2, S3, S4 of the bridge switching unit 100 switched to the relative position to the previous inductive magnetic components blocking stage. For example, the two switch elements S2, S4 are both turned on in the second situation 2.2 since the switch elements S1, S3 are both turned on in the previous blocking stage. Here, the first filter inductor L3 and the second filter inductor L4 withstand the positive voltage and the negative voltage respectively. Due to the diodes D2, D4, the excitation current continues demagnetization through the first suppression inductor L1, the diode D 1 and the bus capacitor C, and is not transferred to the second suppression inductor L2. Under this circumstance, since the DC bus voltage is higher than the AC side peak voltage, the demagnetization voltage in this stage is higher than the voltage on the second filter inductor L4. According to the voltage law, the diode D4 is in the reverse cut-off status. Therefore, the short circuit of the second filter inductor L4 by the diode D4 and the switch element S4 is prevented. When the stored excitation energy is totally discharged, the basic demagnetization stage of the second situation is finished.

Similar to the first situation, if the reverse recovery of the diodes D1, D2, D3, D4 is considered, there is a reverse excitation stage in the second situation 2.2. Like in the first situation 2.1, the reverse recovery current is mainly provided via the magnetize inductance of the inductive coupling magnetic element 13. When the diode completes the reverse recovery and withstands the negative voltage, the excitation current is transferred to the other suppression inductor by coupling, and the positive excitation current of the other suppression inductor is formed.

The third situation 2.3 of the demagnetization stage is that the switch elements S2 and S3 are both turned on. For the basic demagnetization stage of the third situation 2.3, the first filter inductor L3 and the second filter inductor L4 withstand the positive voltage and the negative voltage respectively, and the voltage is a half of the sum of the DC bus voltage and the AC voltage. Under this circumstance, the demagnetization voltage on the first suppression inductor L1 is the same as that of the first situation, and the demagnetization is also realized via the diode D1. If the reverse recovery of the diodes D1, D2, D3, D4 is considered, there is also a reverse excitation stage in the third situation 2.3.

The final status of the three basic statuses is the rectification circuit 12 blocking stage. When the excitation energy is totally discharged and the bridge switching unit 100 is in a status other than the status that the switch elements S 1 and S3 are on or the switch elements S2 and S4 are on, the diodes of the rectification circuit 12 withstand the corresponding negative voltage.

Consequently, as mentioned, there may exist one or two or three statuses of the above-mentioned three basic statuses in one working period. For example, there may be only the second basic status in one working period, or there may be both the first basic status and the second basic status in one working period, or there may be the first basic status, the second basic status and the third basic status in one working period. Since the second situation of the second basic status (the demagnetization stage) not only realizes demagnetization but also blocks the short circuit of the filter inductor, there can be only one basic status in one working period in extreme circumstances.

In brief, the power conversion device 1 of the embodiments of the present disclosure can not only lead the surge energy to the bus capacitor C via the inductive coupling magnetic element 13 and the rectification circuit 12 but also use the inductive coupling magnetic element 13 to realize the blocking to the short circuit of the filter inductor. Consequently, the normal work of the bridge switching unit 100 is not affected.

However, if the inductive coupling magnetic element 13 has low coupling level or too much winding turns, the leakage inductance in the circuit becomes larger, and the effect of suppressing surge energy is affected. Therefore, in some embodiments, the inductance of the inductive coupling magnetic element 13 in differential-mode circuit is under 1 $\mu$H, so that the power conversion device 1 can have good behavior in the 8/20 $\mu$s standard surge test.

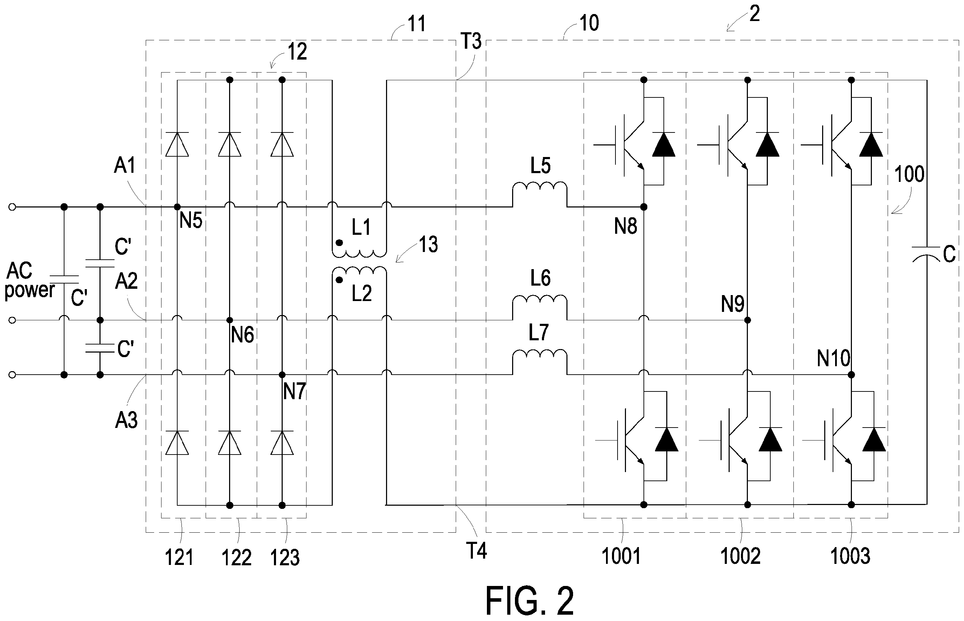

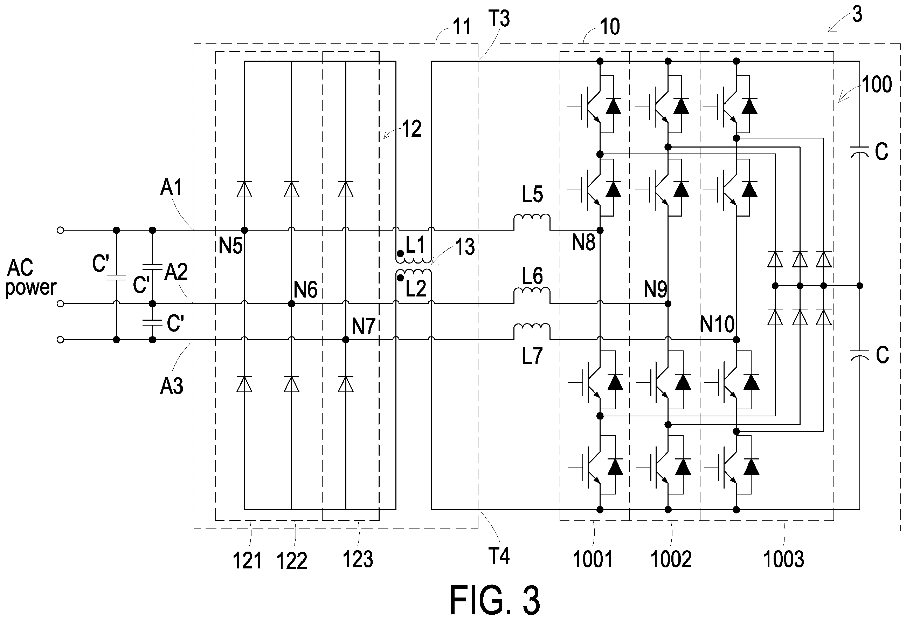

Moreover, the power conversion device 1 is not limited to the full-bridge power conversion circuit shown in FIG. 1. In some embodiments, as shown in FIG. 2, the AC power source is a three-phase power, and the power conversion device 2 may be a three-phase power conversion circuit. In other embodiment, as shown in FIG. 3, the power conversion device 3 may be a three-phase multi-level power conversion circuit. As shown in FIGS. 2 and 3, the inductive coupling magnetic element 13 is electrically connected with the rectification circuit 12 in series, and forms a five-terminal network (i.e. surge bypass circuit 11) with the rectification circuit 12. Moreover, both of the power conversion devices 2 and 3 may further include a first filter inductor L5, a second filter inductor L6 and a third filter inductor L7. The first filter inductor L5 is electrically connected between an eighth node N8 (a middle point) of a first bridge arm 1001 of the bridge switching unit 100 and the first terminal of the AC power source Vac. The second filter inductor L6 is electrically connected between a ninth node N9 (a middle point) of a second bridge arm 1002 of the bridge switching unit 100 and the second terminal of the AC power source Vac. The third filter inductor L7 is electrically connected between a tenth node N10 (a middle point) of a third bridge arm 1003 of the bridge switching unit 100 and a third terminal of the AC power source Vac.

Furthermore, the five-terminal network includes three AC terminals A1, A2 and A3 and two DC terminals T3 and T4. The first AC terminal A1 is a fifth node N5 (a middle point) of a first bridge arm 121 of the rectification circuit 12. The second AC terminal A2 is a sixth node N6 (a middle point) of a second bridge arm 122 of the rectification circuit 12. The third AC terminal A3 is a seventh node N7 (a middle point) of a third bridge arm 123 of the rectification circuit 12. The two DC terminals T3, T4 are the second terminal of the first suppression inductor L1 and the second terminal of the second suppression inductor L2 respectively. The operations of the surge bypass circuits 11 of the power conversion devices 2, 3 shown in FIGS. 2 and 3 are the same as that of the surge bypass circuit 11 shown in FIG. 1. Therefore, as shown in FIGS. 2 and 3, identical numeral references designated mean that the operation and the structure are similar, and detailed descriptions thereof are omitted.

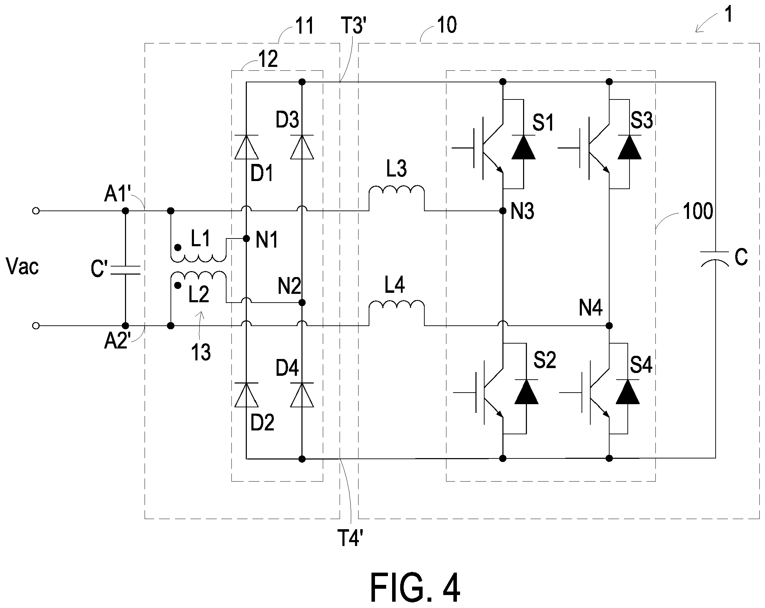

Besides, the disposed position of the inductive coupling magnetic element 13 is not limited to that shown in FIG. 1 or FIG. 2. In some embodiments, as shown in FIG. 4, the inductive coupling magnetic element 13 and the rectification circuit 12 form a four-terminal network (i.e. surge bypass circuit 11). The connecting relations of the first suppression inductor L1 and the second suppression inductor L2 are different from those shown in FIG. 1. The first terminal of the first suppression inductor L1 is electrically connected with the first terminal of the AC power source Vac. The second terminal of the first suppression inductor L1 is electrically connected with the first node N1 (the middle point between the diodes D1 and D2). The first terminal of the second suppression inductor L2 is electrically connected with the second terminal of the AC power source Vac. The second terminal of the second suppression inductor L2 is electrically connected with the second node N2 (the middle point between the diodes D3 and D4).

In addition, as shown in FIG. 4, the connecting relation of the rectification circuit 12 is different from that shown in FIG. 1. The positive output terminal T3' of the rectification circuit 12 shown in FIG. 4 is electrically connected with the first terminal of the bus capacitor C and a first terminal of the bridge switching unit 100. The negative output terminal T4' of the rectification circuit 12 is electrically connected with the second terminal of the bus capacitor C and a second terminal of the bridge switching unit 100.

As shown in FIG. 4, the two AC terminals A1', A2' of the four-terminal network are the first terminal of the first suppression inductor L1 and the first terminal of the second suppression inductor L2 respectively. The two DC terminals T3', T4' are the positive output terminal and the negative output terminal of the rectification circuit 12 respectively.

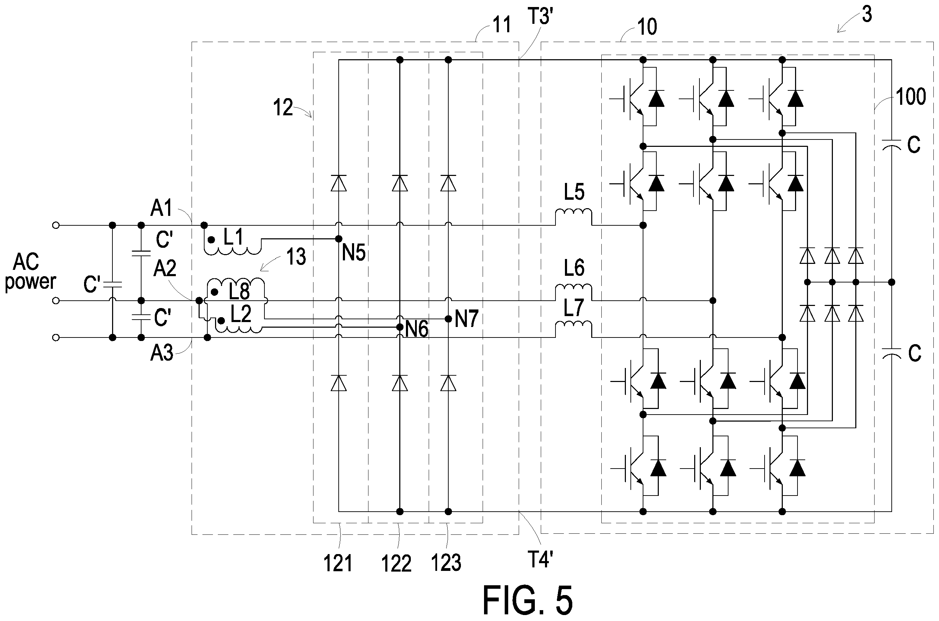

In addition, as shown in FIG. 5, the power conversion device 3 is a three-phase power conversion circuit, and the inductive coupling magnetic element 13 and the rectification circuit 12 form a five-terminal network (i.e. surge bypass circuit 11). As shown in FIG. 5, the connecting relations of the first suppression inductor L1 and the second suppression inductor L2 are different from those shown in FIG. 4. The first terminal of the first suppression inductor L1 is electrically connected with the first AC terminal A1. The second terminal of the first suppression inductor L1 is electrically connected with the fifth node N5 (a middle point) of the first bridge arm 121. The first terminal of the second suppression inductor L2 is electrically connected with the second AC terminal A2. The second terminal of the second suppression inductor L2 is electrically connected with the sixth node N6 (a middle point) of the second bridge arm 122. The first terminal of the third suppression inductor L8 is electrically connected with the third AC terminal A3. The second terminal of the third suppression inductor L8 is electrically connected with the seventh node N7 (a middle point) of the third bridge arm 123.

In addition, as shown in FIG. 5, the connecting relation of the rectification circuit 12 is different from that shown in FIG. 4. The positive output terminal T3' is electrically connected with the first terminal of the corresponding bus capacitor C and a first terminal of the bridge switching unit 100. The negative output terminal T4' is electrically connected with the second terminal of the corresponding bus capacitor C and a second terminal of the bridge switching unit 100.

As shown in FIG. 5, the five-terminal network formed by the rectification circuit 12 and the inductive coupling magnetic element 13 includes three AC terminals A1, A2, A3 and two DC terminals T3', T4'. The first AC terminal A1, the second AC terminal A2 and the third AC terminal A3 are the first terminal of the first suppression inductor L1, the first terminal of the second suppression inductor L2 and the first terminal of the third suppression inductor L8 respectively. The two DC terminals T3', T4' are the positive output terminal and the negative output terminal of the rectification circuit 12 respectively.

In summary, the present disclosure provides a power conversion device including a surge bypass circuit. Therefore, the surge energy is led into the bus capacitor for being absorbed via the rectification circuit and the inductive coupling magnetic element of the surge bypass circuit. In addition, the inductive coupling magnetic element is used to realize the block to the short circuit of the filter inductor, so that the normal work of the bridge switching unit of the power conversion circuit is not affected.

While the disclosure has been described in terms of what is presently considered to be the most practical and preferred embodiments, it is to be understood that the disclosure needs not be limited to the disclosed embodiment.

**Claims**

1. A power conversion device (1) for receiving and converting an AC power provided by an AC power source (Vac), the power conversion device (1) comprising:

   a power conversion circuit (10) comprising a bridge switching unit (100), at least one filter inductor (L3, L4) and a bus capacitor (C), wherein the at least one filter inductor (L3, L4) is electrically connected with the bridge switching unit (100), the bridge switching unit (100) comprises two DC terminals (T1, T2) electrically connected with two terminals of the bus capacitor (C) respectively; and
   a surge bypass circuit (11) comprising a rectification circuit (12) and an inductive coupling magnetic element (13), wherein the inductive coupling magnetic element (13) is electrically connected with the rectification circuit (12) in series, and the inductive coupling magnetic element (13) and the rectification circuit (12) form a multi-terminal network, wherein the multi-terminal network comprises plural AC terminals (A1, A2, A3, A1', A2') and two DC terminals (T3, T4), wherein the plural AC terminals (A1, A2, A3, A1', A2') are electrically connected with the AC power source (Vac), and the bridge switching unit (100) and the bus capacitor (C) are electrically connected with the two DC terminals (T3, T4) in parallel.

2. The power conversion device according to claim 1, wherein the inductive coupling magnetic element (13) comprises a first suppression inductor (L1) and a second suppression inductor (L2), and the first suppression inductor (L1) and the second suppression inductor (L2) are coupled with each other to form coupling inductors.

3. The power conversion device according to claim 2, wherein the AC power source (Vac) is a single-phase AC power source, the multi-terminal network is a four-terminal network, the plural AC terminals comprises two AC terminals (A1, A2), and the at least one filter inductor comprises a first filter inductor (L3) and a second filter inductor (L4), wherein the first filter inductor (L3) is electrically connected between a middle point (N3) of a first bridge arm of the bridge switching unit (100) and a first terminal of the AC power source (Vac), and the second filter inductor (L4) is electrically connected between a middle point (N4) of a second bridge arm of the bridge switching unit (100) and a second terminal of the AC power source (Vac).

4. The power conversion device according to claim 3, wherein a first terminal of the first suppression inductor (L1) is electrically connected with a positive output terminal of the rectification circuit (12), and a second terminal of the first suppression inductor (L1) is electrically connected with a first terminal of the bus capacitor (C), wherein a first terminal of the second suppression inductor (L2) is electrically connected with a negative output terminal of the rectification circuit (12), and a second terminal of the second suppression inductor (L2) is electrically connected with a second terminal of the bus capacitor (C).

5. The power conversion device according to claim 4, wherein one of the two AC terminals (A1, A2) of the four-terminal network is a middle point (N1) of a first bridge arm of the rectification circuit (12), and the other one of the two AC terminals (A1, A2) of the four-terminal network is a middle point (N2) of a second bridge arm of the rectification circuit (12), wherein the two DC terminals (T3, T4) are the second terminal of the first suppression inductor (L1) and the second terminal of the second suppression inductor (L2) respectively.

6. The power conversion device according to any of claims 3 to 5, wherein a first terminal of the first suppression inductor (L1) is electrically connected with the first terminal of the AC power source (Vac), and a second terminal of the first suppression inductor (L1) is electrically connected with a middle point (N1) of a first bridge arm of the rectification circuit (12), wherein a first terminal of the second suppression inductor (L2) is electrically connected with the second terminal of the AC power source (Vac), and a second terminal of the second suppression inductor (L2) is electrically connected with a middle point (N2) of a second bridge arm of the rectification circuit (12).

7. The power conversion device according to claim 6, wherein the two AC terminals (A1', A2') of the four-terminal network are the first terminal of the first suppression inductor (L1) and the first terminal of the second suppression inductor (L2) respectively, wherein the two DC terminals (T3', T4') of the four-terminal network are a positive output terminal and a negative output terminal of the rectification circuit (12) respectively.

8. The power conversion device according to any of the preceding claims, wherein only signal-level current flows through the inductive coupling magnetic element (13), the inductive coupling magnetic element (13) comprises an air-gap-free magnetic core, a magnetize inductance (Lm) of the inductive coupling magnetic element (13) is over ten times to an inductance of the first filter inductor (L3) and an inductance of the second filter inductor (L4).

9. The power conversion device according to claim 2, wherein the AC power source (Vac) is a three-phase AC power source, the multi-terminal network is a five-terminal network comprising a first AC terminal (A1), a second AC terminal (A2) and a third AC terminal (A3), and the at least one filter inductor comprises a first filter inductor (L5), a second filter inductor (L6) and a third filter inductor (L7), wherein the first filter inductor (L5) is electrically connected between a middle point (N8) of a first bridge arm (1001) of the bridge switching unit (100) and a first terminal of the AC power source (Vac), the second filter inductor (L6) is electrically connected between a middle point (N9) of a second bridge arm (1002) of the bridge switching unit (100) and a second terminal of the AC power source (Vac), and the third filter inductor (L7) is electrically connected between a middle point (N10) of a third bridge arm (1003) of the bridge switching unit (100) and a third terminal of the AC power source (Vac).

10. The power conversion device according to claim 9, wherein a first terminal of the first suppression inductor (L1) is electrically connected with a positive output terminal of the rectification circuit (12), a second terminal of the first suppression inductor (L1) is electrically connected with a first terminal of the bus capacitor (C), wherein a first terminal of the second suppression inductor (L2) is electrically connected with a negative output terminal of the rectification circuit (12), and a second terminal of the second suppression inductor (L2) is electrically connected with a second terminal of the bus capacitor (C).

11. The power conversion device according to claim 9 or 10, wherein the first AC terminal (A1) of the five-terminal network is a middle point (N5) of a first bridge arm (121) of the rectification circuit (12), the second AC terminal (A2) of the five-terminal network is a middle point (N6) of a second bridge arm (122) of the rectification circuit (12), the third AC terminal (A3) of the five-terminal network is a middle point (N7) of a third bridge arm (123) of the rectification circuit (12), and the two DC terminals (T3, T4) are the second terminal of the first suppression inductor (L1) and the second terminal of the second suppression inductor (L2) respectively.

12. The power conversion device according to any of claims 9 to 11, wherein the inductive coupling magnetic element (13) further comprises a third suppression inductor (L8), and the rectification circuit (12) comprises a first bridge arm (121), a second bridge arm (122) and a third bridge arm (123), wherein a first terminal of the first suppression inductor (L1) is electrically connected with the first terminal of the AC power source (Vac), and a second terminal of the first suppression inductor (L1) is electrically connected with a middle point (N5) of the first bridge arm (121) of the rectification circuit (12), wherein a first terminal of the second suppression inductor (L2) is electrically connected with the second terminal of the AC power source (Vac), and a second terminal of the second suppression inductor (L2) is electrically connected with a middle point (N6) of the second bridge arm (122) of the rectification circuit (12), wherein a first terminal of the third suppression inductor (L8) is electrically connected with the third terminal of the AC power source (Vac), and a second terminal of the third suppression inductor (L8) is electrically connected with a middle point (N7) of the third bridge arm (123) of the rectification circuit (12).

13. The power conversion device according to claim 12, wherein the first AC terminal (A1) of the five-terminal network is the first terminal of the first suppression inductor (L1), the second AC terminal (A2) of the five-terminal network is the first terminal of the second suppression inductor (L2), the third AC terminal (A3) of the five-terminal network is the first terminal of the third suppression inductor (L8), and the two DC terminals (T3', T4') of the five-terminal network are a positive output terminal and a negative output terminal of the rectification circuit (12) respectively.

**14.** The power conversion device according to any of the preceding claims, wherein the magnetize inductance of the inductive coupling magnetic element (13) is smaller than 1 μH in a differential-mode circuit.

**15.** The power conversion device according to any of the preceding claims, wherein the power conversion device (1) is a full-bridge power conversion circuit or a multi-level power conversion circuit, the power conversion device (1) is operated with a unipolar PWM modulation method.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 17 19 3941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/052660 A1 (ABB TECHNOLOGY AG) 16 April 2015 (2015-04-16) * figure 5 * * page 5 - page 6 * * page 7, lines 27-31 * ----- | 1-15 | INV. H02M1/32 H02M7/219 H02M7/5387 H02H7/122 H02H9/04 |
| A | JP H08 23682 A (YASKAWA ELECTRIC CORP) 23 January 1996 (1996-01-23) * abstract; figures 2,5 * ----- | 9-13 | ADD. H02M1/00 H02M1/42 |
| A | DE 103 60 549 A1 (SIEMENS AG [DE]) 14 July 2005 (2005-07-14) * figures 1,2 * ----- | 1-15 | |

TECHNICAL FIELDS
SEARCHED (IPC)

H02M
H02H

The present search report has been drawn up for all claims

| Place of search | Date of completion of the search | Examiner |
|---|---|---|
| The Hague | 9 February 2018 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 3941

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2018

| Patent document cited in search report | | Publication date | Patent family member(s) | | Publication date |
|---|---|---|---|---|---|
| WO 2015052660 | A1 | 16-04-2015 | CN<br>EP<br>WO | 106416031 A<br>3055924 A1<br>2015052660 A1 | 15-02-2017<br>17-08-2016<br>16-04-2015 |
| JP H0823682 | A | 23-01-1996 | NONE | | |
| DE 10360549 | A1 | 14-07-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610873349